# EUROPEAN PATENT SPECIFICATION

(11) **EP 2 755 129 B1**
(45) Date of publication and mention of the grant of the patent: **12.10.2016**
(21) Application number: 12829322.2
(22) Date of filing: 06.07.2012
(51) Int. Cl.: G06F 9/44, G06F 12/02, G06F 9/50, G06F 9/455

(54) **MEMORY ALLOCATION METHOD, PROGRAM, AND SYSTEM**
SPEICHERZUORDNUNGSVERFAHREN, PROGRAMM UND SYSTEM
PROCÉDÉ, PROGRAMME ET SYSTÈME D'ATTRIBUTION DE MÉMOIRE

(30) Priority: 09.09.2011 JP 2011197051
(43) Date of publication of application: 16.07.2014
(73) Proprietor: Intellectual Business Machines Corporation, Armonk, New York 10504 (US)
(72) Inventor: HORII Hiroshi, Tokyo 135-8511 (JP); Thomas R Gissel, Winchester, Hampshire SO21 2JN (GB)
(74) Representative: Shaw, Anita
(86) International application number: PCT/JP2012/067326
(87) International publication number: WO 2013/035420

(56) References cited:
- US-A1- 2008 162 859
- HITCHENS R: "Top Ten New Things You Can Do with NIO", INTERNET CITATION, 10 February 2002 (2002-02-10), XP002284689, [retrieved on 2004-06-09]
- MASATAKA KURIHARA: 'Direct Byte Buffer no View' 20 July 2012, XP008170841 Retrieved from the Internet: <URL:http://d.hatena.ne.jp/masataka_k/ 20061201/1164948883> [retrieved on 2012-07-20]
- TATSUYA AOYAGI: 'Java 2 SDK 1.4' JAVA WORLD vol. 6, no. 6, 01 June 2002, pages 36 - 50, XP008172383

## Description

### Technical Field

The present invention relates to a computer memory allocation technique, and more specifically to a technique for Java (R) processor or the like to perform memory allocation in a memory area managed by another processor.

### Background Art

Thanks to beneficial advantages such as multi-platform compatibility, Java (R) has heretofore been used as processors for constructing systems.

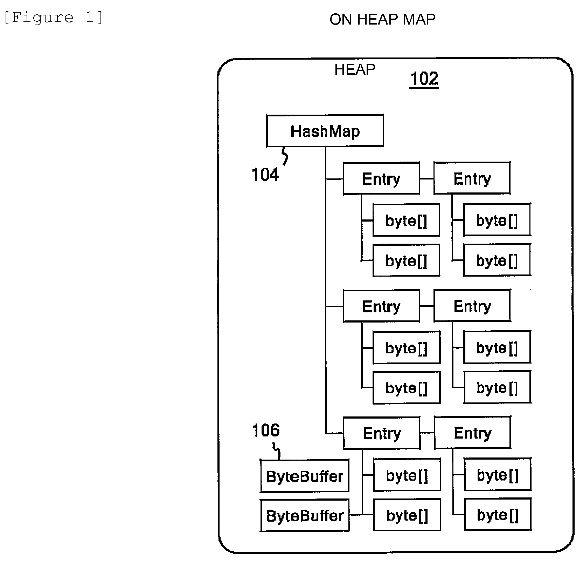

Meanwhile, large scale-distributed processing systems have employed the Key-value store (KVS) technique in recent years. In the KVS technique, many key-and-value combinations are stored as an associative array using hash (Hash Map). FIG. 1 shows such data structure implemented in Java (R) in an ordinary way. In this structure, values saved in KVS are stored as a HashMap 104 containing multiple entries in a Java(R) heap 102 in a server system implementing KVS.

Upon receipt of a request from a client system, the server system constructs a ByteBuffer object 106 in the heap 102. For this reason, the type of each data piece stored in the HashMap is the ByteBuffer itself, or a byte array (byte[]) which is actual data of the ByteBuffer object, as shown in FIG. 1.

However, locating many objects on the heap 102 in this manner reduces space in the heap and causes frequent garbage collection. Since overhead of garbage collection increases along with an increase in the number of objects in the heap, overhead of garbage collection in JVM running KVS inevitably becomes high.

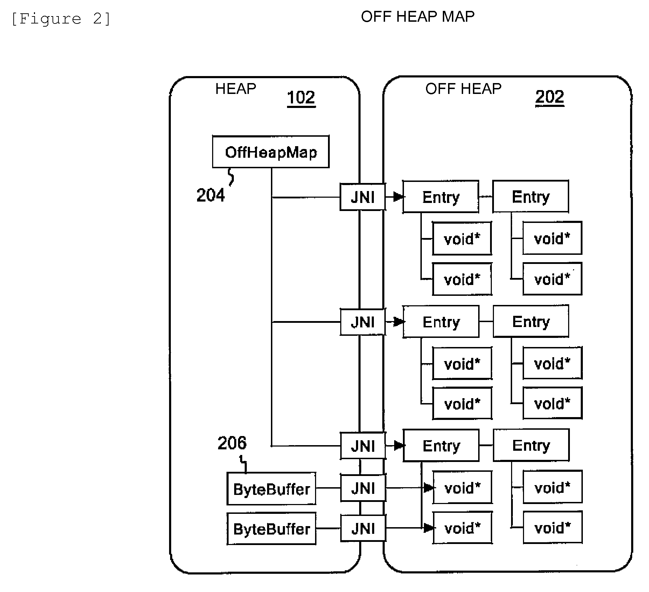

As a solution to this problem, an effective method is to use a mechanism shown in FIG. 2, in which entities of objects are located on a memory area (off heap 202) outside the control by Java (R), and an off heap map 204 containing pointers to anchors for the entities is located on the heap 102. In this mechanism, an object entity of a byte buffer 206, created when the server system receives a request from a client system, is also located on the off heap 202. By thus locating the object entities on the off heap 202, memory consumption and the number of objects in the heap 102 can be reduced, and overhead of garbage collection can also be reduced.

Java (R) uses a mechanism called Java (R) Native Interface (JNI) to handle objects in the off heap 202 with a standard API. For details on JNI, refer to Rob Gordon, "Essential JNI: Java Native Interface," 1998, Prentice Hall, for example.

To be more concrete, JNIEnv->NewDirectByteBuffer(address,size) is called to create a ByteBuffer which points to a previously-allocated memory block 302 in the off heap 202. Here, address is the absolute address of a memory block in the off heap, and size is the size of the memory block. For details on ByteBuffers of Java (R), refer to Ron Hitchens, "Java Nio", 2002, O'Reilly, for example.

Although it is possible to create the ByteBuffer pointing to the memory block 302 at the previously-allocated address in the off heap 202 by calling JNIEnv->NewDirectByteBuffer(address,size), there is a problem that overhead of the creation processing is practically very high.

To put it more specifically, JNIEnv->NewDirectByteBuffer(address,size) includes the following steps.
1. Java (R) processor calls JNI library processor with address and size required by Java (R).
2. JNI library (C, C++) processor executes JNIEnv->NewDirectByteBuffer(address,size).
3. JNI library processor calls Java (R) processor that constructs and initializes some Java (R) objects for creating ByteBuffer.
4. Java (R) processor returns created ByteBuffer to JNI library processor.
5. JNI library processor returns returned ByteBuffer to Java(R) processor.
6. Java (R) processor uses available ByteBuffer.

Since each of these steps has high overhead, the entire overhead is extremely high.

In a conventional system, every time a server system receives a request from a client system and needs to create a ByteBuffer, for example, the aforementioned processing JNIEnv->NewDirectByteBuffer(address,size) of high overhead has to be executed. This causes a problem of degradation in overall performance.

### Citation List

Non-Patent Literature 1 - Rob Gordon, "Essential JNI: Java Native Interface", 1998, Prentice Hall
Non-patent Literature 2 - Ron Hitchens, "Java Nio", 2002, O'Reilly

HITCHENS R: "Top Ten New Things You Can Do with NIO", INTERNET CITATION, XP002284689 discloses features associated with Java NIO (NEW Input/Output). In particular, it discloses that a ByteBuffer object can be wrapped around any memory address the native code can obtain, even memory outside the Java Virtual Machine's own address space.

US 2008/162859 A1 discloses systems methods and computer products for reclaiming resident buffers on demand.

### Summary of Invention

It is an objective of the present invention to reduce overhead for creation of a buffer for accessing an off heap by Java (R) processor or the like using a predetermined interface such as JNI.

According to the present invention, the above problem can be solved by previously creating one or multiple ByteBuffers, which are particularly referred to as phantom ByteBuffers in this invention, of sizes as large as possible within the range of the specification.

In a preferable embodiment, JNIEnv->NewDirectByteBuffer(address,size) is similarly called to create the phantom ByteBuffers, and the processing itself requires the aforementioned overhead. At this time, the range specified by the address and size of the phantom ByteBuffer is set so as to cover an assumed range of memory block addresses in an off heap. Note, however, that the predetermined specification of Java (R) nio limits the size of a ByteBuffer to 2 GB, and thus a single phantom ByteBuffer may not be large enough to cover the assumed range of memory block addresses in the off heap.

For this reason, it is preferable that multiple phantom ByteBuffers of different addresses be created so as to widely cover the assumed range of memory block addresses in the off heap.

In the above-mentioned state where multiple phantom ByteBuffers are ensured so as to widely cover the assumed range of memory block addresses in the off heap, upon receipt of a request from the system for creating a ByteBuffer with an address and size, the program having prepared the phantom ByteBuffers finds the phantom ByteBuffer including the range specified by the address and size, and calls position(), limit() and slice() which are methods of the ByteBuffer. In other words, a ByteBuffer of the required address and size is cut out by: invoking position() with the requested address as an argument; invoking limit() with the requested size as an argument; and invoking slice(). The ByteBuffer thus cut out can be used as a buffer for the specified memory block in the off heap. Upon receipt of another request from the system for creating a ByteBuffer using a range specified by an address and size, the same processing is repeated.

That is, once the phantom ByteBuffer is created, a ByteBuffer subsequently requested by the system can be created, just by slicing the phantom ByteBuffer by use of a method of the ByteBuffer with relatively low overhead.

Note that if there is no phantom ByteBuffer including the range specified by the address and size required by the system, a phantom ByteBuffer including the range specified by the address and size needs to be created with predetermined overhead. However, such processing may be almost unnecessary and may rarely happen if phantom ByteBuffers are previously created according to a cautious forecast.

In addition, if a large number of phantom ByteBuffers are prepared, high overhead may be required to identify a phantom ByteBuffer including a specified range for creating each ByteBuffer. However, this overhead can be reduced by deleting a specific phantom ByteBuffer that frequently fails to include a range specified by a requested address and size.

According to the present invention, it is possible to reduce overhead for creation of a buffer for accessing an off heap by Java (R) processor or the like using a predetermined interface such as JNI. The overhead is reduced because the buffer is created in response to a request only by slicing off a portion of a phantom ByteBuffer previously created.

### Brief Description of Drawings

FIG. 1 is a diagram showing an example of an on heap map.
FIG. 2 is a diagram showing an example of an off heap map.

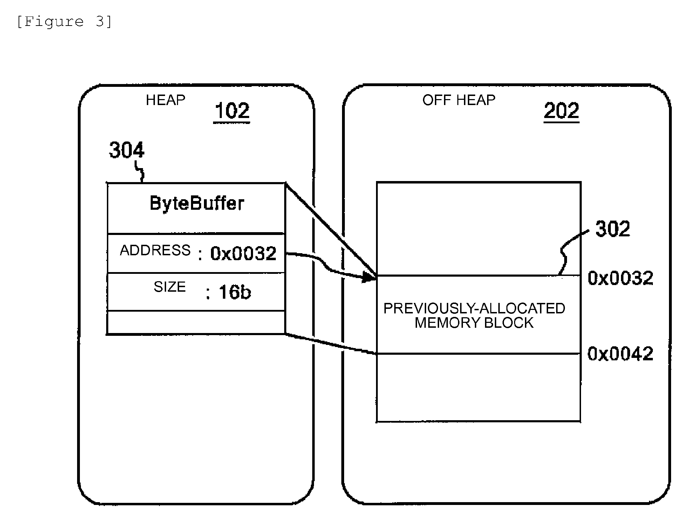

FIG. 3 is a diagram showing a correspondence between a ByteBuffer in a heap and a memory block in an off heap.
FIG. 4 is a block diagram showing an example of hardware for carrying out the invention.
FIG. 5 is a diagram showing layers of a software configuration.
FIG. 6 is a diagram showing a flowchart of processing of the invention.
FIG. 7 is a diagram showing another flowchart of processing of the invention.
FIG. 8 is a diagram showing a correspondence between a phantom ByteBuffer in a heap and memory blocks in an off heap.

### Description of Embodiments

Hereinafter, embodiments of the present invention will be described with reference to the drawings. It should be noted that the embodiments are aimed to describe a preferred aspect of the present invention, and are not intended to limit the scope of the invention. Additionally, in the following drawings, the same numerals indicate the same objects if not stated otherwise.

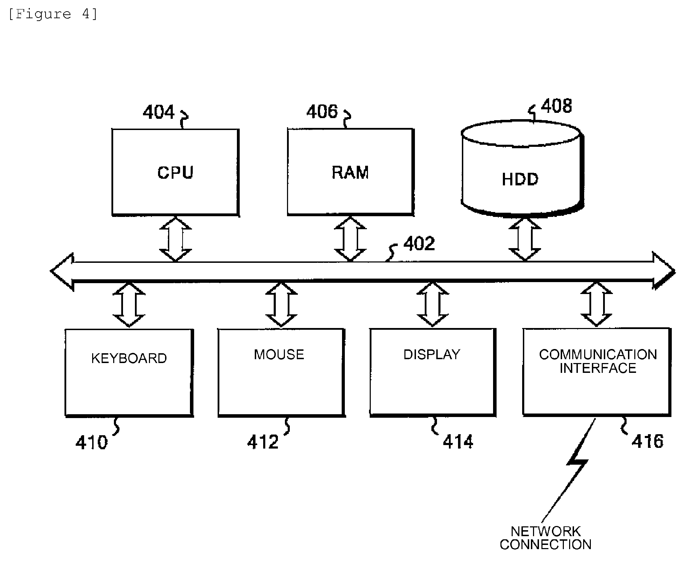

FIG. 4 shows a block diagram of computer hardware for implementing a system configuration and processing of an embodiment of the present invention. In FIG. 4, connected to a system bus 402 are: a CPU 404, a main memory (RAM) 406, a hard disk drive (HDD) 408, a keyboard 410, a mouse 412 and a display 414. The CPU 404 is preferably based on a 32-bit or 64-bit architecture, and Pentium (trademark) 4 of Intel Corporation, Core (trademark) 2 Duo of Intel Corporation, Athlon (trademark) of AMD or the like may be used, for example. Capacity of the main memory 406 is preferably not less than 4 GB, or more preferably not less than 8 GB.

An operating system is stored in the hard disk drive 408. Any of operating systems such as Linux (trademark), Windows (trademark) 7, Windows (trademark) XP, Windows (trademark) 2003 server of Microsoft Corporation, and Mac OS (trademark) of Apple Inc., may be used as long as it is compatible with the CPU 404.

A program, such as Apache, which causes the system to operate as a web server is also saved in the hard disk drive 408, and is loaded into the main memory 406 upon startup of the system.

A Java (R) Runtime Environment program for implementing a Java (R) virtual machine (VM) is also saved in the hard disk drive 408, and is loaded into the main memory 406 upon startup of the system.

The hard disk drive 408 may also include a JIT compiler which converts a bytecode application program into an operating system-native code and runs the program.

The hard disk drive 408 also stores therein a library to be called by JNI, which is preferably a binary program written in C or C++ and compiled.

The keyboard 410 and the mouse 412 are used to operate graphic objects such as an icon, a taskbar, a textbox and the like displayed on the display 414 in accordance with a graphic user interface provided by the operating system.

Although not limited to this, the display 414 is preferably a 32 bit true color LCD monitor with a resolution not lower than 1024×768. The display 414 is used, for example, to display a startup screen of a program implementing the present invention.

A communication interface 416 is preferably connected to a network with an Ethernet (R) protocol. By use of a function provided by Apache, the communication interface 416 receives a processing request according to a communication protocol such as TCP/IP from a client computer (not shown), or returns a processing result to the client computer (not shown).

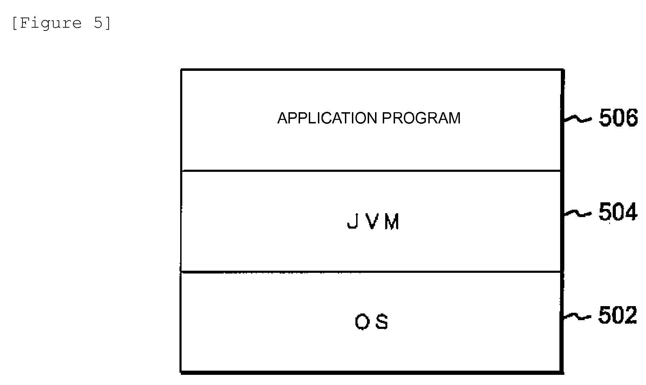

FIG. 5 is a diagram showing layers of a program or a process. An operating system (OS) 502 runs on the hardware shown in FIG. 4, a Java (R) virtual machine (JVM) 504 runs on the OS 502, and an application program 506 runs on the JVM 504. The source code of the application program 506 is compiled with javac or the like and is saved in the hard disk drive 408 in the form of bytecode. The JVM 504 includes a JNI interface and its library, and the application program 506 of the invention uses the JNI interface.

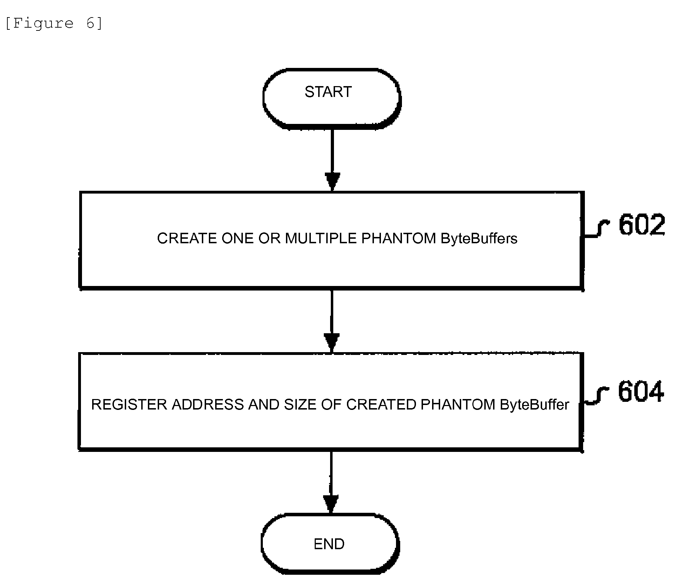

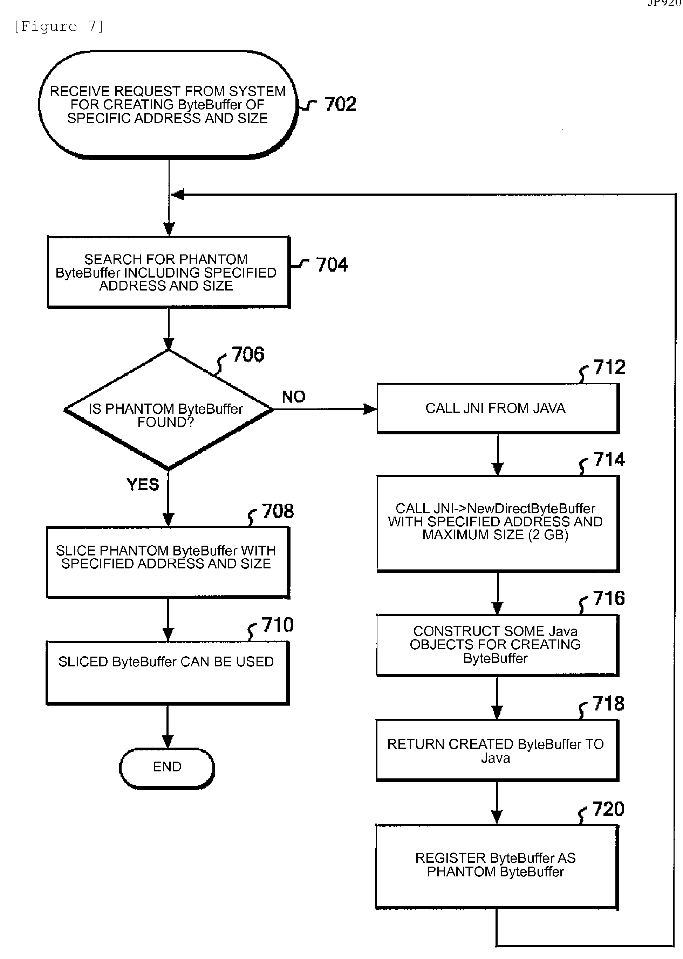

Next, processing executed by the application program 506 will be described with reference to flowcharts shown in FIGs. 6 and 7.

The flowchart in FIG. 6 relates preferably to processing executed by the application program 506 upon startup of the application program 506. In step 602, the application program 506 creates one or multiple phantom ByteBuffers. Particularly in this invention, a phantom ByteBuffer will be referred to as a ByteBuffer pointing to a memory space which may include an area to which the JVM is not allowed access. Here, address is selected so as to cover the range of addresses allocated to memory blocks in the memory in the off heap. Size is preferably set to 2 GB which is the maximum value that can be set within the range of the specification of java. nio. The processing for creating a phantom ByteBuffer is the same as that shown in steps 712 to 720 in the later-described flowchart shown in FIG. 7.

The range of off heap memory to be pointed to by a single phantom ByteBuffer is limited to 2 GB. Therefore, if the assumed range of off heap memory of the application program 506 exceeds 2 GB, a single phantom ByteBuffer is insufficient to cover the assumed range of off heap memory of the application program 506. In this case, multiple phantom ByteBuffers of different addresses are created so as to cover as much as possible the entire assumed range of the off heap memory of the application program 506.

In step 604, the application program 506 registers values of address and size of the created phantom ByteBuffer, preferably to a predetermined region in the heap, as table data such as a hash table.

The flowchart in FIG. 7 relates to processing of the application program 506 for creating a ByteBuffer in response to a request from the system.

Step 702 is initiated when the application program 506 receives, from the system, a request for creating a ByteBuffer of a specific address and size.

Subsequently, in step 704, the application program 506 accesses the information registered in step 604 of FIG. 6, and searches for a phantom ByteBuffer which includes the range indicated by the specified address and size.

In step 706, the application program 506 determines whether or not a phantom ByteBuffer fulfilling the condition specified in step 704 is found, and if so, slices the found out phantom ByteBuffer according to the specified address and size. position(), limit() and slice() methods of the ByteBuffer are used for this operation. More specifically, a ByteBuffer of the required address and size is cut out by: invoking position() with the requested address as an argument; invoking limit() with the requested size as an argument; and invoking slice(). Thus in step 710, the cut out ByteBuffer can be used as a buffer for the specified memory block in the off heap. Hence, the processing for creating the ByteBuffer is terminated.

Returning to step 706, if no phantom ByteBuffer fulfilling the condition specified in step 704 is found, the application program 506 creates a phantom ByteBuffer of a range starting from the specified address. To be more precise, in this processing, the application program 506 calls JNI from Java (R) in step 712.

Then in step 714, the application program 506 calls JNIEnv->NewDirectByteBuffer(address,size) with the specified address and maximum size (2 GB).

Next in step 716, the application program 506 constructs some objects for creating a ByteBuffer.

In step 718, the created ByteBuffer is returned to Java (R).

Thereafter in step 720, the application program 506 registers the created ByteBuffer as a phantom ByteBuffer.

Hence, the processing returns to step 704. Then, since the phantom ByteBuffer is newly registered, the corresponding phantom ByteBuffer is found in step 704, the determination in step 706 turns positive, and in step 708 the ByteBuffer is created by slicing in the aforementioned manner.

The steps 712 to 720 carried out when determined in step 706 that no phantom ByteBuffer is found have high overhead. However, a corresponding phantom ByteBuffer is found in most cases if phantom ByteBuffers are prepared so as to cover the memory addresses of a previously assumed range. Accordingly, the determination in step 706 turns positive and the process proceeds to step 708, so that the problem of overhead hardly arises.

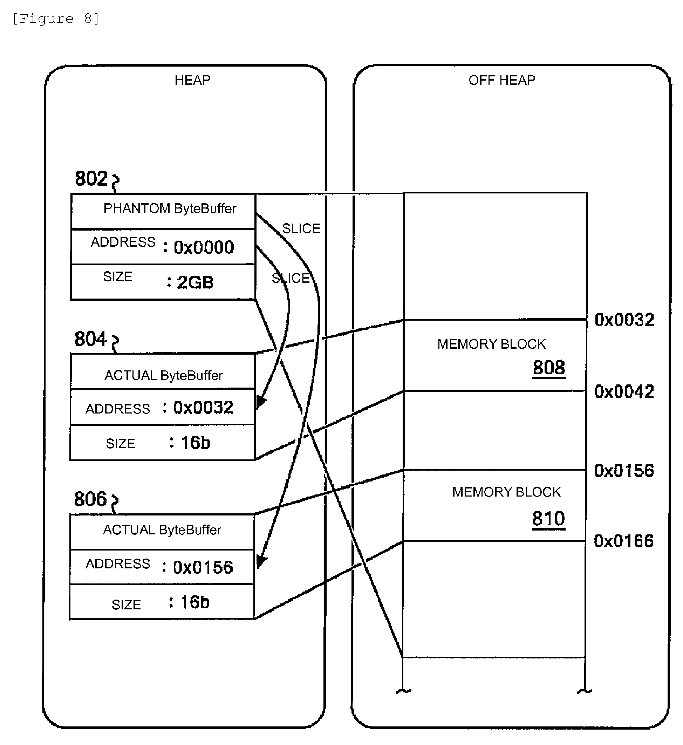

FIG. 8 is a diagram showing a schematic representation of how a phantom ByteBuffer is sliced and actual ByteBuffers are cut out therefrom. In FIG. 8, a phantom ByteBuffer 802 is created in advance in step 602 of FIG. 6.

Then as shown in step 702 of FIG. 7, upon receipt of a request for creating a ByteBuffer from the system, an actual (i.e., other than phantom) ByteBuffer 804 is created by slicing the phantom ByteBuffer in step 708, and the actual ByteBuffer 804 points to a memory block 808 in the off heap.

Subsequently, upon receipt of another ByteBuffer creation request from the system, an actual ByteBuffer 806 is created by slicing the phantom ByteBuffer in step 708, and the actual ByteBuffer 806 points to a memory block 810 in the off heap.

As has been described, once a phantom ByteBuffer is created at the cost of the overhead, any number of desired actual ByteBuffers can thereafter be created just by slicing the phantom ByteBuffer. The processing of slicing the ByteBuffer is completed within Java (R), which, unlike JNI, has relatively low overhead.

Hereinabove, an embodiment of the present invention has been described in an example of creating a buffer pointing from Java (R), by way of JNI, to a memory block in the off heap. It should however be noted that the invention is not limited to specific hardware and Operating system, processor or application program, as long as it is a processor including a native interface for another system.

### Reference Signs List

- 404: CPU,
- 406: main memory,
- 408: hard disk drive,
- 502: OS,
- 504: JVM,
- 506: application program,
- 802: phantom ByteBuffer,
- 804: actual ByteBuffer,
- 806: actual ByteBuffer

## Claims

1. A method for a system running a program on a language processor which includes a special class for a buffer for accessing a memory space specified by an absolute address, the method being implemented by a computer, the method comprising the steps of:
creating one or more first buffer objects of the class by the computer, the one or more first buffer objects configurable to include a memory space that the language processor is not permitted to access, having a range of addresses allocated to memory blocks in the memory space and a maximum allowable size;
in response to a subsequent request (702) for creating a second buffer object having an address associated with access-permitted memory space and a size, invoking, against the one or more first buffer objects, a position method with the requested address as an argument, a limit method with the requested size as an argument; and a slice method;
recording an address and size of each of the one or more first buffer objects of the class;
wherein the step of creating the second buffer object includes searching (704) the created one or more first buffer objects of the class whose addresses are recorded to find a certain first buffer object including an address range indicated by the requested address and size; and
in response to failing (706-NO) to find the certain first buffer object; creating (718) an additional first buffer object of the class which includes an address range starting from the requested address.

2. The method according to claim 1, wherein the language processor is Java (R), the class is ByteBuffer and the processing for creating one or more buffer objects of the class is executed by calling a JNI interface.

3. The method according to claim 1, further comprising the step of creating a plurality of first buffer objects having different ranges of addresses from each other.

4. A computer program product comprising computer program code stored on a computer readable medium to, when loaded into a computer system and executed thereon, cause said computer system to perform all the steps of a method according to any of claims 1 to 3.

5. A system running a program on a language processor which includes a special class for a buffer for accessing a memory space specified by an absolute address, comprising:
means for creating one or more first buffer objects of the class, the one or more first buffer objects configurable to include a memory space that the language processor is not permitted to access, having a range of addresses allocated to memory blocks in the memory space and a maximum allowable size;
means, responsive to a subsequent request (702) for creating a second buffer object having an address associated with access-permitted memory space and a size, for invoking, against the one or more first buffer objects, a position method with the requested address as an argument, a limit method with the requested size as an argument; and a slice method;
means for recording an address and size of each of the one or more first buffer objects of the class;
wherein the creating means includes means for searching (704) the created one or more first buffer objects of the class whose addresses are recorded to find a certain first buffer object including an address range indicated by the requested address and size; and
means, responsive to failing (706-NO) to find the certain first buffer object; for creating (718) an additional first buffer object of the class which includes an address range starting from the requested address.

## Patentansprüche

1. Verfahren für ein System, das ein Programm auf einem Sprachprozessor ausführt, wobei das Programm eine spezielle Klasse für einen Pufferspeicher zum Zugreifen auf einen Speicherbereich beinhaltet, der durch eine absolute Adresse festgelegt wird, wobei das Verfahren durch einen Computer umgesetzt wird und das Verfahren die Schritte umfasst:
Erzeugen eines oder mehrerer erster Pufferobjekte der Klasse durch den Computer, wobei das eine oder die mehreren Pufferobjekte zum Einschließen eines Speicherbereichs konfigurierbar sind, auf den der Sprachprozessor nicht zugriffsberechtigt ist und der einen Adressbereich, der an Speicherblöcke in dem Speicherbereich zugeordnet ist, und eine höchstzulässige Größe aufweist;
reagierend auf eine nachfolgende Anforderung (702) zum Erzeugen eines zweiten Pufferobjekts mit einer Adresse, die einem zum Zugreifen freigegebenen Speicherbereich und einer Größe zugehörig ist, Anwenden eines Positionierungsverfahrens mit der angeforderten Adresse als ein Argument, eines Begrenzungsverfahrens mit der angeforderten Größe als ein Argument und eines Ausschnittverfahrens auf das eine oder die mehreren Pufferobjekte;
Aufzeichnen einer Adresse und Größe des einen oder jedes der mehreren ersten Pufferobjekte der Klasse;
wobei der Schritt des Erzeugens des zweiten Pufferobjekts ein Suchen (704) des erzeugten einen oder der mehreren ersten Pufferobjekte der Klasse beinhaltet, deren Adressen zum Auffinden eines bestimmten ersten Pufferobjekts aufgezeichnet wurden, das einen Adressbereich beinhaltet, der durch die angeforderte Adresse und Größe angegeben wird; und
reagierend auf ein Scheitern (706 - NO), das bestimmte erste Pufferobjekt aufzufinden, Erzeugen (718) eines weiteren ersten Pufferobjekts der Klasse, das einen Adressbereich, beginnend ab der angeforderten Adresse, beinhaltet.

2. Verfahren nach Anspruch 1, wobei es sich bei dem Sprachprozessor um Java^{®} und bei der Klasse um ByteBuffer handelt und wobei das Verarbeiten zum Erzeugen eines oder der mehrerer Pufferobjekte der Klasse durch Aufrufen einer JNI-Schnittstelle ausgeführt wird.

3. Verfahren nach Anspruch 1, das ferner den Schritt eines Erzeugens einer Vielzahl von ersten Pufferobjekten mit jeweils verschiedenen Adressbereichen umfasst.

4. Computer-Programmprodukt, das auf einem computerlesbaren Medium gespeicherten Computer-Programm-Code umfasst, der, wenn er auf ein Computer-System geladen und darauf ausgeführt wird, das Computer-System zum Durchführen aller Schritte eines Verfahrens nach irgendeinem der Ansprüche 1 bis 3 veranlasst.

5. System, das ein Programm auf einem Sprachprozessor ausgeführt, wobei das Programm eine spezielle Klasse für einen Puffer zum Zugreifen auf einen Speicherbereich beinhaltet, der durch eine absolute Adresse festgelegt wird, wobei das System umfasst:
ein Mittel zum Erzeugen eines oder mehrerer erster Pufferobjekte der Klasse, wobei das eine oder die mehreren Pufferobjekte zum Einschließen eines Speicherbereichs konfigurierbar sind, auf den der Sprachprozessor nicht zugriffsberechtigt ist und einen Adressbereich, der an Speicherblöcke in dem Speicherbereich zugeordnet ist, und eine höchstzulässige Größe aufweist;
reagierend auf eine nachfolgende Anforderung (702) zum Erzeugen eines zweiten Pufferobjekts mit einer Adresse, die einem zum Zugreifen freigegebenen Speicherbereich und einer Größe zugehörig ist, ein Mittel zum Anwenden eines Positionierungsverfahrens mit der angeforderten Adresse als ein Argument, eines Begrenzungsverfahrens mit der angeforderten Größe als ein Argument und eines Ausschnittverfahrens auf das eine oder die mehrere Pufferobjekte;
ein Mittel zum Aufzeichnen einer Adresse und Größe des einen oder jedes der mehreren ersten Pufferobjekte der Klasse;
wobei die Erzeugungsmittel ein Mittel zum Suchen (704) des erzeugten einen oder der mehreren ersten Pufferobjekte der Klasse beinhalten, deren Adressen zum Auffinden eines bestimmten ersten Pufferobjekts aufgezeichnet wurden, das einen Adressbereich beinhaltet, der durch die angeforderte Adresse und Größe angegeben wird; und
reagierend auf das Scheitern (706 - NO), das bestimmte erste Pufferobjekt zu finden, ein Mittel zum Erzeugen (718) eines weiteren ersten Pufferobjekts der Klasse, das einen Adressbereich, beginnend von der angeforderten Adresse, beinhaltet.

## Revendications

1. Procédé pour un système exécutant un programme sur un processeur de langage qui inclut une classe spéciale pour une mémoire tampon pour accéder à un espace de mémoire spécifié par une adresse absolue, le procédé étant implémenté par un ordinateur, le procédé comprenant les étapes consistant à :
créer un ou plusieurs premiers objets de mémoire tampon de la classe par l'ordinateur, le ou les premiers objets de mémoire tampon étant configurables afin d'inclure un espace de mémoire auquel le processeur de langage n'est pas autorisé à accéder, ayant une plage d'adresses allouées aux blocs de mémoire dans l'espace de mémoire et une taille autorisée maximale ;
en réponse à une demande subséquente (702) de création d'un second objet de mémoire tampon ayant une adresse associée à un espace de mémoire à accès autorisé et une taille, invoquer, contre le ou les premiers objets de mémoire tampon, un procédé de position avec l'adresse demandée comme argument, un procédé de limite avec la taille demandée comme argument ; et un procédé de tranche ;
enregistrer une adresse et une taille de chacun du ou des premiers objets de mémoire tampon de la classe ;
l'étape de création du second objet de mémoire tampon incluant de rechercher (704) le ou les premiers objets de mémoire tampon créés dont les adresses sont enregistrées afin de trouver un certain premier objet de mémoire tampon incluant une plage d'adresses indiquée par l'adresse demandée et la taille ; et
en réponse à l'échec (706 - NO) pour trouver le certain premier objet de mémoire tampon, créer (718) un premier objet de mémoire tampon additionnel de la classe qui inclut une plage d'adresses démarrant à l'adresse demandée.

2. Procédé selon la revendication 1, dans lequel le processeur de langage est Java (R), la classe est ByteBuffer et le traitement pour créer un ou plusieurs objets de mémoire tampon de la classe est exécuté en appelant une interface JNI.

3. Procédé selon la revendication 1, comprenant en outre l'étape de création d'une pluralité de premiers objets de mémoire tampon ayant des plages d'adresses différentes les uns des autres.

4. Produit de programme informatique comprenant du code de programme informatique mémorisé sur un support lisible par ordinateur pour, quand il est chargé dans un système informatique et exécuté sur celui-ci, amener ledit système informatique à exécuter toutes les étapes d'un procédé selon l'une quelconque des revendications 1 à 3.

5. Système exécutant un programme sur un processeur de langage qui inclut une classe spéciale pour une mémoire tampon pour accéder à un espace de mémoire spécifié par une adresse absolue, le procédé étant implémenté par un ordinateur, comprenant :
un moyen pour créer un ou plusieurs premiers objets de mémoire tampon de la classe par l'ordinateur, le ou les premiers objets de mémoire tampon étant configurables afin d'inclure un espace de mémoire auquel le processeur de langage n'est pas autorisé à accéder, ayant une plage d'adresses allouées aux blocs de mémoire dans l'espace de mémoire et une taille autorisée maximale ;
un moyen pour, en réponse à une demande subséquente (702) de création d'un second objet de mémoire tampon ayant une adresse associée à un espace de mémoire à accès autorisé et une taille, invoquer, contre le ou les premiers objets de mémoire tampon, un procédé de position avec l'adresse demandée comme argument, un procédé de limite avec la taille demandée comme argument ; et un procédé de tranche ;
un moyen pour enregistrer une adresse et une taille de chacun du ou des premiers objets de mémoire tampon de la classe ;
le moyen de création incluant un moyen pour rechercher (704) le ou les premiers objets de mémoire tampon créés dont les adresses sont enregistrées afin de trouver un certain premier objet de mémoire tampon incluant une plage d'adresses indiquée par l'adresse demandée et la taille ; et
un moyen pour, en réponse à l'échec (706 - NO) pour trouver le certain premier objet de mémoire tampon, créer (718) un premier objet de mémoire tampon additionnel de la classe qui inclut une plage d'adresses démarrant à l'adresse demandée.
